(19) Europäisches Patentamt
European Patent Office
Office européen des brevets

(11) EP 4 714 653 A1

(12) **EUROPEAN PATENT APPLICATION**
published in accordance with Art. 153(4) EPC

(43) Date of publication:
**25.03.2026 Bulletin 2026/13**

(21) Application number: **24807080.7**

(22) Date of filing: **07.05.2024**

(51) International Patent Classification (IPC):
***B32B 27/30*** *(2006.01)* ***B32B 27/36*** *(2006.01)*
***C08G 64/04*** *(2006.01)* ***C08J 5/18*** *(2006.01)*
***C08J 7/00*** *(2006.01)* ***C08J 7/18*** *(2006.01)*

(52) Cooperative Patent Classification (CPC):
**B32B 27/30; B32B 27/36; C08G 64/04; C08J 5/18; C08J 7/00; C08J 7/18**

(86) International application number:
**PCT/JP2024/016928**

(87) International publication number:
**WO 2024/237127 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.05.2023 JP 2023081988**
**06.10.2023 JP 2023174113**

(71) Applicant: **MITSUBISHI GAS CHEMICAL COMPANY, INC.**
**Chiyoda-ku**
**Tokyo 100-8324 (JP)**

(72) Inventors:
- **YAMAGUCHI, Madoka**
  **Tokyo 100-8324 (JP)**
- **KAMEI, Shota**
  **Tokyo 125-8601 (JP)**
- **NAKAJIMA, Hirotaka**
  **Tokyo 125-8601 (JP)**
- **HAGA, Ryoichi**
  **Tokorozawa-shi, Saitama 359-1164 (JP)**

(74) Representative: **Hoffmann Eitle**
**Patent- und Rechtsanwälte PartmbB**
**Arabellastraße 30**
**81925 München (DE)**

# (54) MULTILAYER BODY AND CURED PRODUCT OBTAINED BY CURING SAME

(57) Provided is a multilayered body that has excellent hardness and three-dimensional formability. The multilayer body includes a base material layer (a), and a curable resin layer (b) containing a (meth)acryloyl polymer having an acrylic equivalent of from 200 to 600 g/mol, wherein the base material layer (a) comprises 96% by mass or more of a bisphenol A polycarbonate based on the total mass of the base material layer (a), and the base material layer (a) has a midpoint glass transition temperature (Tmg) of from 100 to 140°C.

EP 4 714 653 A1

## Description

Technical Field

The present invention relates to a multilayer body and a cured product obtained by curing the multilayer body.

Background Art

A thermoforming film (also called a functional film or decorative film) is preferably used to impart desired properties (e.g., scratch resistance, chemical resistance, design, etc.) to the surface of a formed article.

When a thermoforming film is applied to a formed article, various forming methods may be used. Examples of the forming methods that are preferably used include vacuum forming, compressed air forming, film insert molding, in-mold molding, three-dimensional decoration (TOM) forming, and the like.

For imparting properties such as scratch resistance to a formed article, the thermoforming film is required to have high hardness. For this reason, the thermoforming film is often made into a multilayer body that has a hard coat layer formed by curing a resin. However, the higher the hardness of the thermoforming film, the lower its formability may become, which can result in insufficient conformability to the formed article. In other words, there is a trade-off between hardness and formability for the thermoforming film.

Methods for achieving both hardness and formability in a thermoforming film have been studied. For example, Patent Literature 1 describes an invention relating to a thermoforming sheet obtained by layering at least three layers in order of a layer A comprising a polycarbonate resin, a layer B comprising an acrylic resin, and a layer C formed from an uncured product of an acrylate-based active energy ray-curable resin composition. In this case, the glass transition temperature (Tg) of the layer A is 100°C or higher and 145°C or lower.

Patent Literature 1 describes that, according to that invention, high formability can be achieved by leaving the layer C, which corresponds to a hard coat layer, in an uncured state when applied to the formed article, and that a hard coat layer with high hardness can be obtained by curing the layer C through subsequent exposure to active energy rays after applying the thermoforming sheet to the formed article (after forming).

Citation List

Patent Literature

Patent Literature 1: Japanese Patent Laid-Open No. 2021-146687

Summary of Invention

Technical Problem

The thermoforming film described in Patent Literature 1 achieves both hardness and formability, but there is room for improvement in three-dimensional formability. Therefore, the present invention provides a multilayer body having excellent hardness and three-dimensional formability.

Solution to Problem

The present invention is, for example, as follows.

[1] A multilayer body comprising:

a base material layer (a); and
a curable resin layer (b) comprising a (meth)acryloyl polymer having an acrylic equivalent of from 200 to 600 g/mol, wherein
the base material layer (a) comprises 96% by mass or more of a bisphenol A polycarbonate based on the total mass of the base material layer (a), and
the base material layer (a) has a midpoint glass transition temperature (Tmg) of from 100 to 140°C.

[2] The multilayer body according to the above [1], wherein the bisphenol A polycarbonate is a polycarbonate obtained by reacting bisphenol A, a carbonate binder, and a monohydric phenol end-capping agent represented by the following formula (1):

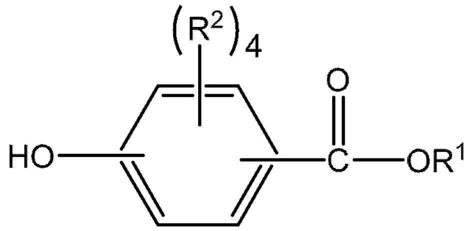

(1)

wherein $R^1$ is an alkyl group having from 8 to 36 carbon atoms, or an alkenyl group having from 8 to 36 carbon atoms, and

each $R^2$ is independently hydrogen, a halogen atom, an alkyl group having from 1 to 20 carbon atoms optionally substituted with a halogen atom or an aryl group having from 6 to 12 carbon atoms, or an aryl group having from 6 to 12 carbon atoms optionally substituted with a halogen atom, an alkyl group having from 1 to 20 carbon atoms, or an aryl group having from 6 to 12 carbon atoms.

[3] The multilayer body according to the above [2], wherein the monohydric phenol end-capping agent represented by formula (1) comprises at least one selected from the group consisting of parahydroxybenzoic acid 2-hexyldecyl ester, parahydroxybenzoic acid hexadecyl ester, parahydroxybenzoic acid dodecyl ester, and parahydroxybenzoic acid 2-ethylhexyl ester.

[4] The multilayer body according to any of the above [1] to [3], wherein the (meth)acryloyl polymer comprises a repeating unit represented by the following formula (2):

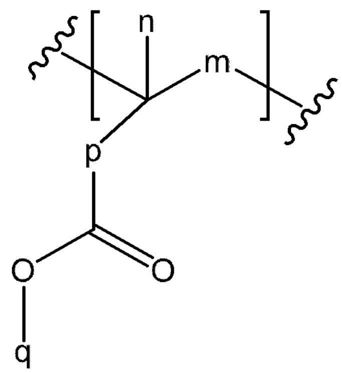

(2)

wherein m is a single bond or an alkylene group having from 1 to 4 carbon atoms, n is hydrogen or an alkyl group having from 1 to 4 carbon atoms,

p is a single bond or an alkylene group having 1 or 2 carbon atoms, and

q is hydrogen or an alkyl group having from 1 to 12 carbon atoms optionally substituted with at least one substituent selected from an epoxy group, a hydroxyl group, and a (meth)acryloyl group.

[5] The multilayer body according to the above [4], wherein the (meth)acryloyl polymer comprises at least one repeating unit represented by the following formulas (2-a) to (2-c):

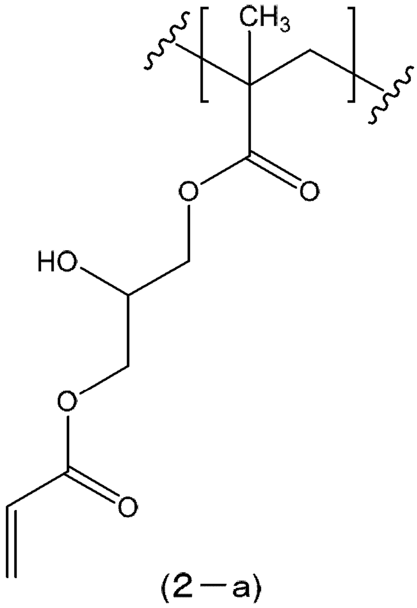

(2−a)

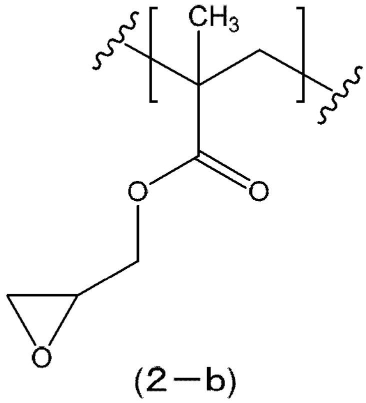

(2−b)

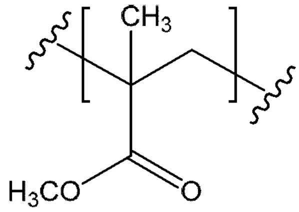

(2−c)

[6] The multilayer body according to any of the above [1] to [5], wherein the (meth)acryloyl polymer has an acrylic equivalent of from 200 to 500 g/mol.
[7] The multilayer body according to any of the above [1] to [6], wherein the curable resin layer (b) further comprises a leveling agent.
[8] The multilayer body according to the above [7], wherein the leveling agent comprises a fluorine-based leveling agent.
[9] The multilayer body according to any of the above [1] to [8], wherein the curable resin layer (b) further comprises inorganic particles.
[10] The multilayer body according to the above [9], wherein the inorganic particles have an average particle size of from 20 to 60 nm.
[11] The multilayer body according to any of the above [1] to [10], wherein the curable resin layer (b) further comprises a light stabilizer.
[12] The multilayer body according to any of the above [1] to [11], wherein the curable resin layer (b) further comprises a polymerization inhibitor.
[13] The multilayer body according to any of the above [1] to [12], wherein the curable resin layer (b) has a thickness of 5 μm or more.
[14] The multilayer body according to any of the above [1] to [13], further comprising an acrylic layer (c),
wherein the base material layer (a), the acrylic layer (c), and the curable resin layer (b) are layered in that order.
[15] The multilayer body according to the above [14], wherein the acrylic layer (c) has a thickness of 20 μm or more.
[16] The multilayer body according to any of the above [1] to [15], which is used for vacuum forming.
[17] The multilayer body according to any of the above [1] to [16], which is used for TOM forming.
[18] A cured product obtained by curing the multilayer body according to any of the above [1] to [17].

Advantageous Effects of Invention

According to the present invention, provided is a multilayer body that has excellent hardness and three-dimensional formability. As a result, the multilayer body can be suitably formed by, for example, three-dimensional decoration (TOM) forming.

Description of Embodiments

Embodiments for carrying out the present invention are now described in detail.

1. Multilayer body

The multilayer body according to the present invention comprises a base material layer (a) and a curable resin layer (b) comprising a (meth)acryloyl polymer having an acrylic equivalent of from 200 to 600 g/mol. The base material

layer (a) comprises 96% by mass or more of a bisphenol A polycarbonate based on the total mass of the base material layer (a). Further, the base material layer (a) has a midpoint glass transition temperature (Tmg) of from 100 to 140°C.

The above-described multilayer body has excellent hardness and three-dimensional formability. Specifically, the multilayer body comprises a curable resin layer (b), that is, an uncured resin layer (b), and has a specified structure, and thus has excellent formability, particularly three-dimensional formability. Further, after the multilayer body is formed, the curable resin layer (b) is cured to obtain a cured film, and as a result a cured product obtained from the multilayer body has high hardness.

As used herein, "midpoint glass transition temperature (Tmg)" means a value obtained by analyzing a DSC curve obtained by differential scanning calorimetry (DSC). Specifically, the "midpoint glass transition temperature (Tmg)" is the midpoint between an initiation glass transition temperature (Tig) and an end glass transition temperature (Teg) when, of a straight line A extending the low-temperature side baseline of the DSC curve to the high-temperature side, a tangent B to an inflection point, and a straight line C extending the high-temperature side baseline to the low-temperature side, the intersection of the straight line A and the tangent B is defined as the initiation glass transition temperature (Tig) and the tangent of the tangent B and straight line C is defined as the end glass transition temperature (Teg). Generally, the glass transition temperature refers to the initiation glass transition temperature (Tig), which is lower than the midpoint glass transition temperature (Tmg). The midpoint glass transition temperature (Tmg) is measured by the method described in the Examples.

**In** one embodiment, the multilayer body according to the present invention is used in vacuum forming. Vacuum forming is a forming method in which forming is performed under vacuum conditions, and examples may include in-mold molding, three-dimensional decoration (TOM) forming, and the like.

When the multilayer body comprising the curable resin layer (b) is used for a formed article (in the case of forming), it is preferable not to allow the curable resin layer (b) to cure during forming, but to cure the curable resin layer (b) after forming.

However, when forming is performed under vacuum conditions, radicals are generated from oxygen atoms and the like comprised in the curable resin layer (b), which can cause unintended curing of the curable resin layer (b) during vacuum forming. As a result, cracks can occur in the curable resin layer (b) after forming.

With the multilayer body according to the present invention, even when forming is performed under vacuum conditions, the multilayer body can be formed without cracks occurring, and the occurrence of cracks in the curable resin layer (b) of the multilayer body can be prevented.

In one embodiment, the multilayer body of the present invention is used for three-dimensional decoration (TOM) forming. The three-dimensional decoration (TOM) forming method includes (1) a vacuum step in which a lower chamber having an opening at an upper portion in which a formed article having an uneven surface is arranged, an upper chamber having an opening at a lower portion in which a heater is arranged, and the multilayer body according to the present invention sandwiched between the lower chamber and the upper chamber are made airtight, and then the multilayer body is placed under vacuum conditions, (2) a heating step in which the multilayer body is heated using the heater, (3) a contacting step in which the formed article having unevenness is brought into contact with the heated multilayer body, (4) an upper chamber de-vacuum step in which the pressure in the upper chamber is changed to atmospheric pressure, and (5) a lower chamber de-vacuum step in which the pressure in the lower chamber is changed to atmospheric pressure.

That is, three-dimensional decoration (TOM) forming is performed by softening a multilayer body with heat under vacuum conditions, pushing up a formed article from below the multilayer body to bring the formed article and the multilayer body into contact (the multilayer body is closely laminated with the formed article due to its own weight), and then completing the lamination by returning the upper chamber to atmospheric pressure in order to create a pressure difference so that the pressure is applied from the upper chamber in the direction of the lower chamber. As a result, a three-dimensionally decorated formed article comprising a formed article having an uneven surface and a multilayer body arranged on the uneven surface can be obtained.

The three-dimensional decoration (TOM) forming may further include, after the upper chamber de-vacuum step, an upper chamber pressurization step in which compressed air is introduced into the upper chamber. In addition, the three-dimensional decoration (TOM) forming may further include, after the lower chamber de-vacuum step, a trimming step in which a portion of the multilayer body arranged on the uneven surface is removed, and a curing step in which the multilayer body is cured.

When a conventional multilayer body is used for three-dimensional decoration (TOM) forming, it is not possible to laminate the multilayer body with high conformability to a formed article having an uneven surface, and even if lamination is possible, cracks may occur in the multilayer body. However, with the multilayer body according to the present invention, lamination can be carried out with high conformability to a formed article having an uneven surface, and the resulting multilayer body is less susceptible to cracking. In other words, the multilayer body according to the present invention has excellent three-dimensional formability. Further, with the multilayer body having the configuration of the present invention, a cured product having high hardness can be obtained.

<Base material layer (a)>

The base material layer (a) comprises a bisphenol A polycarbonate. The base material layer (a) may further comprise other resins, plasticizers, additives, and the like.

[Bisphenol A polycarbonate]

The bisphenol A polycarbonate is a resin that comprises, based on the mass of all the structural units of the bisphenol A polycarbonate excluding the end structures, 80% by mass or more, preferably 90% by mass or more, more preferably 95% by mass or more, further preferably 97% by mass or more, and particularly preferably 98 to 100% by mass of a structural unit derived from bisphenol A (BPA).

In one embodiment, the bisphenol A polycarbonate is preferably a polycarbonate obtained by reacting bisphenol A, a carbonate binder, and a monohydric phenol end-capping agent represented by the following formula (1).

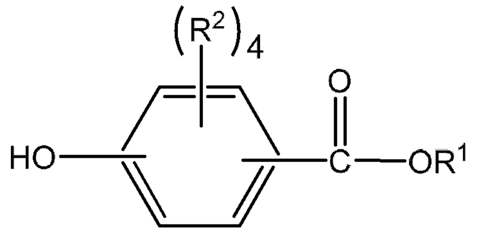

(1)

(Bisphenol A)

Bisphenol A (BPA) is represented by the following formula.

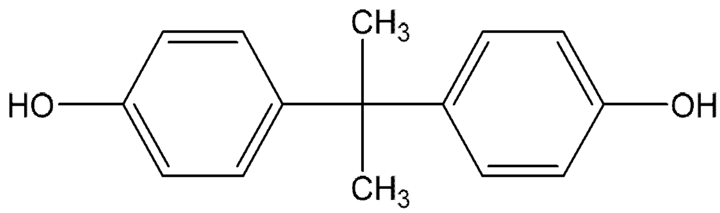

(Compound for deriving another structural unit)

The bisphenol A polycarbonate may be formed by further reacting a compound for deriving another structural unit. By using the compound for deriving another structural unit, the physical properties of the bisphenol A polycarbonate (e.g., midpoint glass transition temperature (Tmg), viscosity average molecular weight, and the like) can be adjusted.

The compound for deriving another structural unit is a polymerizable compound other than bisphenol A, such as a bisphenol compound other than bisphenol A or an organosiloxane, for example.

Examples of the bisphenol compound other than bisphenol A include bis(4-hydroxyphenyl)methane (bisphenol F: BPF), bis(2-hydroxyphenyl)methane, 2,4'-dihydroxydiphenylmethane, bis(4-hydroxy-3-methylphenyl)methane, 1,1-bis(4-hydroxyphenyl)ethane (bisphenol E: BPE), 1,1-bis(4-hydroxy-3-methylphenyl)ethane, 2,2-bis(4-hydroxy-3-methylphenyl)propane (bisphenol C: BPC), 2,2-bis(4-hydroxy-3-isopropylphenyl)propane (bisphenol G: BPG), 2,2-bis(4-hydroxyphenyl)butane (bisphenol B: BPB), 2,2-bis(4-hydroxy-3-t-butylphenyl)propane, 5,5'-(1-methylethylidene)-bis[1,1'-(bisphenyl)-2-ol]propane (bisphenol PH: BPPH), 1,1-bis(4-hydroxyphenyl)-2-methylpropane (bisphenol IBTD), 2,2-bis(4-hydroxyphenyl)-4-methylpentane (bisphenol MIBK), 1,1-bis(4-hydroxyphenyl)-2-ethylhexane (bisphenol IOTD), 1,1-bis(4-hydroxyphenyl)decane, 1,1-bis(4-hydroxyphenyl)cyclohexane (bisphenol Z: BPZ), 1,1-bis(4-hydroxyphenyl)-3,3,5-trimethylcyclohexane (bisphenol TMC), 1,1-bis(4-hydroxy-3-methylphenyl)cyclohexane, 1,1-bis(4-hydroxyphenyl)cycloundecane, 1,1-bis(4-hydroxyphenyl)cyclododecane, 1,1-bis(4-hydroxyphenyl)-1-phenylethane (bisphenol AP: BPAP), bis(4-hydroxyphenyl)diphenylmethane (bisphenol BP; BPBP), bis(4-hydroxyphenyl)sulfide, bis(4-hydroxyphenyl)ether, bis(4-hydroxyphenyl)sulfoxide, bis(4-hydroxyphenyl)sulfone, 2,4'-dihydroxydiphenylsulfone, bis(2-hydroxyphenyl)sulfone, bis(4-hydroxy-3-methylphenyl)sulfonebis(4-hydroxyphenyl)ketone, 9,9-bis(4-hydroxyphenyl)fluorene, 9,9-bis(4-hydroxy-3-methylphenyl)fluorene, 9,9-bis(4-hydroxy-3-ethylphenyl)fluorene, 4,4'-[1,4-phenylenebis(1-methylethylidene)]bisphenol, 4,4'-[1,3-phenylenebis(1-methylethylidene)]bisphenol, 1,3-bis(4-hydroxyphenyl)-5,7-dimethyladamantane, and the like.

Examples of the organosiloxane include α,ω-bis[3-(o-hydroxyphenyl)propyl]polydimethylsiloxane, an α,ω-bis [3-(o-hydroxyphenyl)propyl]polydimethyldiphenyl random copolymer siloxane, and the like.

The above-described compounds for deriving another structural unit may be used alone or in combination of two or more.

The amount of the compound for deriving another structural unit added is, based on 1 mole of bisphenol A, preferably 50 moles or less, and more preferably from 0.1 to 40 moles.

(Carbonate binder)

The carbonate binder is not particularly limited, and examples thereof include a carbonyl compound such as phosgene, triphosgene, carbon monoxide, carbon dioxide, and a carbonate diester.

Examples of the carbonate diester include a dialkyl carbonate compound such as dimethyl carbonate, diethyl carbonate, and di-tert-butyl carbonate, a substituted diphenyl carbonate such as diphenyl carbonate, di-p-tolyl carbonate, phenyl-p-tolyl carbonate, and di-p-chlorophenyl carbonate, and the like.

Among these, it is preferable that the carbonate binder comprises at least one of phosgene, triphosgene, diphenyl carbonate, and a substituted diphenyl carbonate, and more preferably at least one of phosgene and diphenyl carbonate. These carbonate binders may be used alone or in combination of two or more.

(Monohydric phenol end-capping agent represented by formula (1))

The monohydric phenol end-capping agent represented by formula (1) has a function of, for example, adjusting the midpoint glass transition temperature (Tmg) of the bisphenol A polycarbonate.

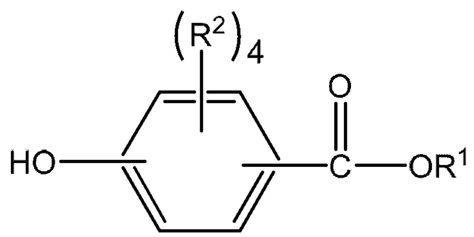
(1)

In formula (1), $R^1$ is an alkyl group having from 8 to 36 carbon atoms, or an alkenyl group having from 8 to 36 carbon atoms, and each $R^2$ is independently hydrogen, a halogen atom, an alkyl group having from 1 to 20 carbon atoms optionally substituted with a halogen atom or an aryl group having from 6 to 12 carbon atoms, or an aryl group having from 6 to 12 carbon atoms optionally substituted with a halogen atom, an alkyl group having from 1 to 20 carbon atoms, or an aryl group having from 6 to 12 carbon atoms. As used herein, "alkyl group" and "alkenyl group" may be either linear or branched, but are preferably linear.

More preferably, the monohydric phenol end-capping agent represented by formula (1) is represented by the following general formula (1-a).

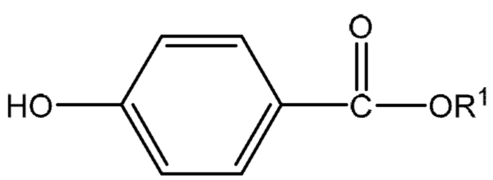
(1-a)

In formula (1-a), $R^1$ is an alkyl group having from 8 to 36 carbon atoms or an alkenyl group having from 8 to 36 carbon atoms.

More preferably, the number of carbon atoms of $R^1$ in formula (1) or formula (1-a) is within a specific numerical range. Specifically, the upper limit value of the number of carbon atoms of $R^1$ is preferably 36, more preferably 22, and particularly preferably 18. Further, the lower limit value of the number of carbon atoms of $R^1$ is preferably 8, and more preferably 12.

If the upper limit value of the number of carbon atoms of $R^1$ is appropriate, the monohydric phenol end-capping agent represented by formula (1) tends to have high organic solvent solubility, which is preferable from viewpoints such as increased productivity during the production of the bisphenol A polycarbonate resin and increased transparency of the bisphenol A polycarbonate resin. As an example, if the number of carbon atoms of $R^1$ is 36 or less, a bisphenol A polycarbonate resin with high transparency can be obtained, and productivity is high when producing the bisphenol A

polycarbonate resin, thereby also improving economic efficiency. If the number of carbon atoms of $R^1$ is 22 or less, the monohydric phenol end-capping agent represented by formula (1) has particularly excellent organic solvent solubility, and productivity can be greatly increased when producing the bisphenol A polycarbonate resin, thereby also improving economic efficiency.

If the lower limit value of the number of carbon atoms of R1 is appropriate, the glass transition point of the bisphenol A polycarbonate resin will not be too high, which is preferable in terms of having suitable thermal formability. For example, when a monohydric phenol end-capping agent represented by formula (1) in which R' is an alkyl group having 16 carbon atoms is used, the midpoint glass transition temperature, melt fluidity, formability, drawdown resistance, and solvent solubility of the monohydric phenol end-capping agent represented by formula (1) during the production of the bisphenol A polycarbonate resin are excellent, and this is particularly preferable as an end terminator for use in the bisphenol A polycarbonate resin of the present invention.

In one embodiment, $R^1$ in formula (1) or formula (1-a) is preferably dodecyl, tridecyl, tetradecyl, pentadecyl, hexadecyl, heptadecyl, octadecyl, 2-ethylhexyl, or 2-hexyldecyl, more preferably tetradecyl, pentadecyl, hexadecyl, heptadecyl, or 2-hexyldecyl, further preferably hexadecyl or 2-hexyldecyl, and particularly preferably 2-hexyldecyl.

In one embodiment, each $R^2$ in formula (1) is independently preferably hydrogen, a halogen atom, methyl, ethyl, propyl, isopropyl, butyl, t-butyl, or phenyl, more preferably hydrogen, a fluorine atom, a chlorine atom, methyl, ethyl, or phenyl, and further preferably hydrogen, a fluorine atom, a chlorine atom, methyl, or ethyl. **In** another embodiment, it is preferable that all $R^2$ are hydrogen.

**In** one embodiment, the monohydric phenol end-capping agent represented by formula (1) preferably comprises at least one selected from the group consisting of parahydroxybenzoic acid 2-hexyldecyl ester, parahydroxybenzoic acid hexadecyl ester, parahydroxybenzoic acid dodecyl ester, and parahydroxybenzoic acid 2-ethylhexyl ester, more preferably at least one of parahydroxybenzoic acid 2-hexyldecyl ester and parahydroxybenzoic acid hexadecyl ester, and further preferably parahydroxybenzoic acid 2-hexyldecyl ester.

The monohydric phenol end-capping agent represented by formula (1) above may be used alone or in combination of two or more.

The amount of the monohydric phenol end-capping agent represented by formula (1) used is, based on 1 mol of bisphenol A, preferably from 0.02 to 0.07 mol, and more preferably from 0.025 to 0.06 mol.

The amount of the monohydric phenol end-capping agent represented by formula (1) used is, based on 1 mol of the carbonate binder, preferably from 0.02 to 0.07 mol, and more preferably from 0.025 to 0.06 mol.

(Other end-capping agents)

The bisphenol A polycarbonate may be formed by further reacting with another end-capping agent. The other end-capping agent is an end-capping agent other than the monohydric phenol end-capping agent represented by formula (1), and is preferably an end-capping agent that does not have an unsaturated group. By using another end-capping agent described above, the physical properties of the bisphenol A polycarbonate (e.g., midpoint glass transition temperature (Tmg), viscosity average molecular weight, etc.) can be adjusted.

Examples of the other end-capping agent include an end-capping agent derived from a monohydric phenol compound.

Examples of the monohydric phenol compound include phenol, p-cresol, o-cresol, 2,4-xylenol, p-tert-butylphenol, p-hexylphenol, p-heptylphenol, p-octylphenol, p-cumylphenol, and the like. These monohydric phenol compounds may be used alone or in combination of two or more.

The amount of the other end-capping agent used is, based on 1 mol of the end-capping agent represented by formula (1), preferably 0.5 mol or less, more preferably 0.2 mol or less, and further preferably 0.1 mol or less.

The amount of the other end-capping agent used is, based on 1 mol of bisphenol A, preferably from 0.02 to 0.07 mol, and more preferably from 0.025 to 0.06 mol.

The midpoint glass transition temperature (Tmg) of the bisphenol A polycarbonate is preferably from 100 to 140°C, more preferably from 125 to 140°C, further preferably from 128 to 140°C, and further preferably from 128 to 135°C. If the midpoint glass transition temperature (Tmg) of the bisphenol A polycarbonate is preferably in the above range because it is easier to control the midpoint glass transition temperature (Tmg) of the base material layer (a).

The viscosity average molecular weight of the bisphenol A polycarbonate is preferably 14000 or more, more preferably 16000 or more, further preferably 20000 or more, particularly preferably 24000 or more, and very preferably 26000 or more. The viscosity average molecular weight of the bisphenol A polycarbonate is preferably 40000 or less, more preferably 38000 or less, further preferably 36000 or less, particularly preferably 34000 or less, and very preferably 32000 or less. **In** one embodiment, the viscosity average molecular weight of the bisphenol A polycarbonate is preferably from 14000 to 40000, more preferably from 16000 to 38000, further preferably from 18000 to 36000, particularly preferably from 20000 to 34000, and very preferably from 24000 to 32000. In this specification, "viscosity average molecular weight" is measured by the method described in the Examples. When the bisphenol A polycarbonate is a mixture of two or more

bisphenol A polycarbonates having different molecular weights, the viscosity average molecular weight after mixing is adopted.

The content of bisphenol A polycarbonate is, based on the total mass of the base material layer (a), 96% by mass or more, more preferably 98% by mass or more, and further preferably 100% by mass.

[Plasticizer]

The base material layer (a) may further comprise a plasticizer. The plasticizer has a function of adjusting the midpoint glass transition temperature (Tmg) of the base material layer.

The plasticizer is not particularly limited, and examples thereof include a polyester, a polyether, an aromatic phosphonate compound, and an aromatic ester compound.

Examples of the polyester include an aliphatic polyester such as polycaprolactone (PCL); and an aromatic polyester such as a polyethylene terephthalate modified resin and a polycaprolactone polyethylene terephthalate modified resin.

Examples of the polycaprolactone polyethylene terephthalate modified resin include glycol-modified polyethylene terephthalate (PETG) and glycol-modified polycyclohexylene dimethylene terephthalate (PCTG).

PETG is a resin in which, of the units constituting PET (terephthalic acid units, which are dicarboxylic acid units, and ethylene glycol units, which are glycol units), some of the ethylene glycol units are replaced with 1,4-cyclohexanedimethanol units. The content of the 1,4-cyclohexanedimethanol units is, based on total glycol units, preferably less than 50 mol%, and more preferably from 30 to 40 mol%.

PCTG is a resin in which, of the units constituting PCT (terephthalic acid units, which are dicarboxylic acid units, and 1,4-cyclohexanedimethanol units, which are glycol units), some of the glycol units are replaced with glycol units. The content of the glycol units is, based on total glycol units, preferably less than 50 mol%, and more preferably from 30 to 40 mol%.

The number average molecular weight of the polyester is preferably from 10000 to 100000, and more preferably from 20000 to 60000. In this specification, the "number average molecular weight" value is measured by gel permeation chromatography.

Examples of the polyether include a polyether having at least one unit selected from the group consisting of an ethylene glycol unit, a propylene glycol unit, a butylene glycol unit, a trimethylene glycol unit, and a tetramethylene glycol unit. Specifically, the polyether may be a homopolymer or a copolymer, and in the case of a copolymer, it may be obtained by any of a random copolymerization, alternating copolymerization, block copolymerization, graft copolymerization, or a combination thereof. Specific examples of the polyether include polyethylene glycol, polypropylene glycol, polybutylene glycol, a block copolymer of polyethylene glycol and polypropylene glycol, and the like.

The number average molecular weight of the polyether is preferably from 500 to 4000, more preferably from 600 to 3000, and further preferably from 800 to 2000.

Examples of the aromatic phosphonate compound include triphenyl phosphate, tricresyl phosphate, trixylenyl phosphate, cresyl diphenyl phosphate, 2-ethylhexyl diphenyl phosphate, tert-butylphenyl diphenyl phosphate, bis-(tert-butylphenyl)phenyl phosphate, tris-(tert-butylphenyl)phosphate, isopropylphenyl diphenyl phosphate, bis-(isopropylphenyl)diphenyl phosphate, tris-(isopropylphenyl)phosphate, resorcinol bis-diphenyl phosphate, resorcinol poly(di-2,6-xylyl) phosphate, resorcinol bis-dixylenyl phosphate, bisphenol A bis-diphenyl phosphate, biphenyl bis-diphenyl phosphate, and the like.

The molecular weight of the aromatic phosphonate compound is preferably from 200 to 1000, and more preferably from 400 to 800.

Examples of the aromatic ester compound include diethylene glycol dibenzoate, glyceryl tribenzoate, trimethylolpropane tribenzoate, pentaerythritol tetrabenzoate, and the like. The molecular weight of the aromatic ester compound is preferably from 200 to 1000, and more preferably from 400 to 800.

Of the above, the plasticizer preferably comprises a polyester or an aromatic phosphonate compound, more preferably comprises a polyester, further preferably comprises at least one of polycaprolactone (PCL), glycol-modified polyethylene terephthalate (PETG), and glycol-modified polycyclohexylene dimethylene terephthalate (PCTG), and particularly preferably comprises polycaprolactone (PCL). The above-described plasticizers may be used alone or in combination of two or more.

The content of the plasticizer is, based on the total mass of the base material layer (a), preferably 4% by mass or less, more preferably 3% by mass or less, and further preferably from 0.1 to 2% by mass. When the content of the plasticizer is 4% by mass or less, the base material layer (a) can contain the bisphenol A polycarbonate at a content of 96% by mass or more.

[Additives]

The base material layer (a) may further comprise an additive.

The additive is not particularly limited, and examples thereof include a polycarbonate other than a bisphenol A polycarbonate, an antioxidant, an ester exchange inhibitor, a release agent, a heat stabilizer, a flame retardant, a flame retarding aid, an ultraviolet absorber, a colorant, an antistatic agent, a fluorescent brightener, an antifogging agent, a flow improver, a plasticizer, a dispersant, an antibacterial agent, an antiblocking agent, an impact improver, a sliding improver, a hue improver, an acid trapping agent, and the like. These additives may be used alone or in combination of two or more.

The content of the additive is, based on the total mass of the base material layer (a), preferably 4% by mass or less, more preferably 3% by mass or less, and further preferably from 0.1 to 2% by mass. When the content of the additive is 4% by mass or less, the base material layer (a) can comprise bisphenol A polycarbonate at a content of 96% by mass or more.

[Structure of base material layer (a)]

The midpoint glass transition temperature (Tmg) of the base material layer (a) is from 100 to 140°C, preferably from 110 to 140°C, more preferably from 120 to 140°C, further preferably from 120 to 135°C, and particularly preferably from 125 to 135°C. The midpoint glass transition temperature (Tmg) of the base material layer (a) can be controlled by appropriately adjusting the structure of the bisphenol A polycarbonate (e.g., the content of the structural unit derived from bisphenol A (BPA), the type and content of each of the other structural units, the type of the end-capping agent used, the viscosity average molecular weight, etc.), the type and content of the plasticizer added to the base material layer (a), and the like.

The thickness of the base material layer (a) is preferably from 10 to 800 μm, more preferably from 20 to 500 μm, and further preferably from 30 to 400 μm. In one embodiment, the thickness of the base material layer (a) is preferably from 20 to 140 μm, more preferably from 30 to 120 μm, and further preferably from 60 to 120 μm. In another embodiment, the thickness of the base material layer (a) is preferably from 140 to 500 μm, more preferably from 150 to 400 μm, further preferably from 180 to 300 μm, and particularly preferably from 180 to 260 μm.

The Charpy impact strength of the base material layer (a) is preferably 30 kJ/$m^2$ or more, and more preferably 45 kJ/$m^2$ or more. **In** this specification, the "Charpy impact strength" is measured by the method described in the Examples.

<Curable resin layer (b)>

The curable resin layer (b) comprises a (meth)acryloyl polymer having an acrylic equivalent of from 200 to 600 g/mol. Since the curable resin layer (b) is in an uncured state, it has excellent three-dimensional formability when forming the multilayer body according to the present invention. Therefore, when three-dimensional forming is performed, the curable resin layer (b) has good conformability, and cracks are unlikely to occur in the curable resin layer (b) after forming. **In** addition, the cured product obtained by curing the multilayer body has high hardness, and may have high scratch resistance, chemical resistance, and the like. As used herein, "(meth)acryloyl" means methacryloyl and/or acryloyl. Similarly, "(meth)acrylic" and "(meth)acrylate" mean methacrylic and/or acrylic, methacrylate and/or acrylate.

[(Meth)acryloyl polymer]

The (meth)acryloyl polymer preferably comprises a repeating unit represented by the following formula (2).

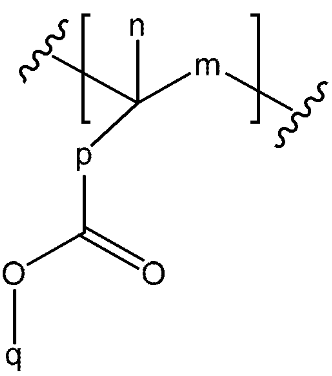

(2)

In formula (2), m is a single bond or an alkylene group having from 1 to 4 carbon atoms, is preferably methylene or

ethylene, and more preferably methylene.

n is hydrogen or an alkyl group having from 1 to 4 carbon atoms, is preferably hydrogen, methyl, or ethyl, more preferably hydrogen or methyl, and further preferably hydrogen.

p is a single bond or an alkylene group having 1 or 2 carbon atoms, is preferably a single bond or methylene, and further preferably a single bond.

q is hydrogen or an alkyl group having from 1 to 12 carbon atoms optionally substituted with at least one substituent selected from an epoxy group, a hydroxyl group, and a (meth)acryloyl group, is preferably an alkyl group having from 1 to 4 carbon atoms optionally substituted with at least one substituent selected from an epoxy group and a (meth)acryloyl group, and further preferably an alkyl group having 1 or 2 carbon atoms optionally substituted with at least one substituent selected from an epoxy group and a (meth)acryloyl group.

In one embodiment, the (meth)acryloyl polymer preferably comprises at least one of the repeating units represented by the following formulas (2-a) to (2-c).

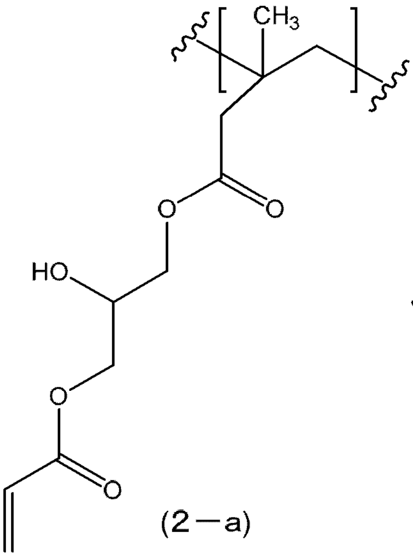
(2-a)

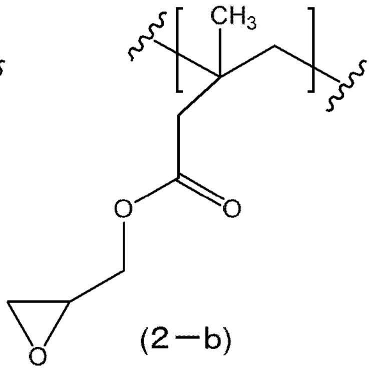
(2-b)

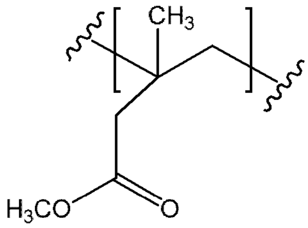
(2-c)

or

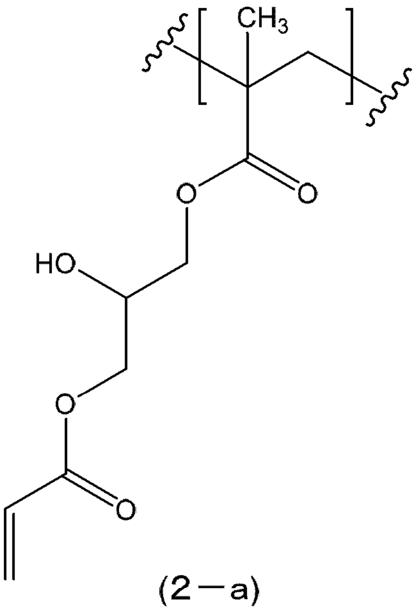
(2-a)

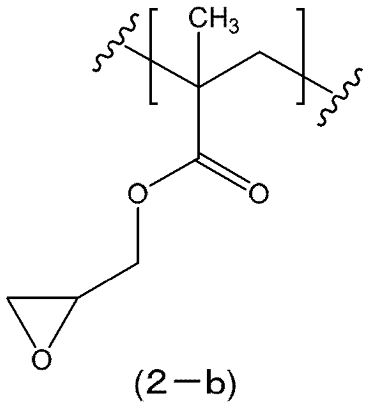
(2-b)

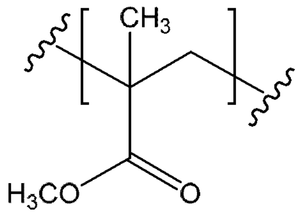
(2-c)

The content of the repeating unit represented by formula (2-a) is, based on the total number of moles of the (meth)acryloyl polymer, preferably from 30 to 85 mol%, and more preferably from 40 to 80 mol%.

The content of the repeating unit represented by formula (2-b) is, based on the total number of moles of the (meth)acryloyl polymer, preferably from 5 to 30 mol%, and more preferably from 10 to 25 mol%.

The content of the repeating unit represented by formula (2-c) is, based on the total number of moles of the (meth)acryloyl polymer, preferably from 10 to 40 mol%, and more preferably from 10 to 35 mol%.

The above-described (meth)acryloyl polymers may be used alone or in combination of two or more.

The molar ratio of the repeating unit represented by formula (2-a) to the repeating unit represented by formula (2-b) is preferably 4.5 to 5.5:1.5 to 2.5.

The molar ratio of the repeating unit represented by formula (2-a) to the repeating unit represented by formula (2-c) is preferably 4.5 to 5.5:2.5 to 3.5.

The molar ratio of the repeating unit represented by formula (2-b) to the repeating unit represented by formula (2-c) is preferably 1.5 to 2.5:2.5 to 3.5.

The acrylic equivalent of the (meth)acryloyl polymer is from 200 to 600 g/mol, and from the viewpoint of increased hardness of the cured product, the acrylic equivalent is preferably from 200 to 500 g/mol, more preferably from 200 to 400, and further preferably from 200 to 300. As used herein, the (meth)acrylic equivalent (g/mol) means the molecular weight per (meth)acryloyl group, and can be calculated by the method described in the Examples.

The weight average molecular weight of the (meth)acryloyl polymer is preferably from 5000 to 200000, more preferably from 10000 to 150000, further preferably from 15000 to 100000, and particularly preferably from 20000 to 50000. In this specification, "weight average molecular weight" is calculated by the method described in the Examples.

The content of the (meth)acryloyl polymer is, based on the total mass of the curable resin layer (b), preferably 50% by mass or more, more preferably 60% by mass or more, further preferably from 60 to 100% by mass, and particularly preferably from 60 to 90% by mass.

[Polyfunctional acrylate compound]

The curable resin layer (b) may further comprise a polyfunctional acrylate compound. The polyfunctional acrylate compound can improve the hardness and the like of the cured product by reacting with, for example, a (meth)acryloyl group, an epoxy group, a hydroxyl group, or the like in the (meth)acryloyl polymer. As used herein, "polyfunctional" means having two or more functional groups, preferably three or more functional groups, more preferably from three to eight functional groups, and further preferably from three to six functional groups.

The polyfunctional acrylate compound is not particularly limited, and examples thereof include pentaerythritol triacrylate, pentaerythritol tetraacrylate, dipentaerythritol hexaacrylate, and the like.

The content of the polyfunctional acrylate compound is, based on the total content of the (meth)acryloyl polymer and the polyfunctional acrylate compound, preferably 70% by mass or less, more preferably 50% by mass or less, and further preferably 30% by mass or less.

[Inorganic particles]

The curable resin layer (b) may further comprise inorganic particles. The inorganic particles can improve the hardness and scratch resistance of the cured product.

The inorganic particles are not particularly limited, and examples thereof include silica, alumina, titania, zirconia, diamond, and the like.

The inorganic particles may be surface-treated. By surface-treating the inorganic particles, the inorganic particles can be dispersed in a stable state in the curable resin layer (b). In this case, the surface treatment agent used is not particularly limited, and examples thereof include a silane compound, an alcohol, an amine, a carboxylic acid, a sulfonic acid, a phosphonic acid, and the like. These surface treatment agents may be used alone or in combination of two or more. As a result of the surface treatment, a polymerizable group (preferably a vinyl group or a (meth)acrylic group) can be introduced onto the inorganic particle surface.

The above-described inorganic particles may be used alone or in combination of two or more.

The average particle size of the inorganic particles is preferably from 5 to 95 nm, more preferably 8 to 70 nm, and from the viewpoint of improving the scratch resistance of the cured product obtained, is further preferably from 20 to 60 nm, and particularly preferably from 30 to 60 nm. As used herein, "particle size" means the maximum distance between two points on the outer surface of the particle. Further, "average particle size" is measured by the method described in the Examples.

The content of the inorganic particles is, based on the total mass of the curable resin layer (b), preferably from 5 to 60% by mass, more preferably from 10 to 50% by mass, and further preferably from 20 to 40% by mass.

[Leveling agent]

The curable resin layer (b) may further comprise a leveling agent. The leveling agent has a function such as leveling properties (making the coating film smooth and flat) and improving the fingerprint wipability, stain resistance, and

abrasion resistance of the cured product.

The leveling agent is not particularly limited, and examples thereof include a fluorine-based leveling agent and a silicone-based leveling agent.

Examples of the fluorine-based leveling agent include a compound having a perfluoropolyether bond. A commercially available fluorine-based leveling agent can be used, for example Megafac RS-56, RS-75, RS-76-E, RS-76-NS, RS-78, and RS-90 (manufactured by DIC Corporation), KY-1203, X-71-1203E, KY-1207, and KY-1211 (manufactured by Shin-Etsu Chemical Co., Ltd.), Optool UD120 (manufactured by Daikin Industries, Ltd.), Ftergent 710FL, 220P, 208G, 601AD, 602A, 650A, 228P, and 240GFTX-218 (manufactured by Neos Co., Ltd.), and the like.

Examples of the silicone-based leveling agent include an acrylic group-containing polyether-modified polydimethylsiloxane. A commercially available silicone-based leveling agent can be used, for example BYK-UV3500 and BYK-UV3505 (manufactured by BYK Japan Co., Ltd.), and the like.

Among these, from the viewpoint of improving the ability of the cured product to wipe off fingerprints, it is preferable that the leveling agent comprises a fluorine-based leveling agent. The above-described leveling agents may be used alone or in combination of two or more.

The content of the leveling agent is, based on the total mass of the curable resin layer (b), preferably from 0.001 to 10% by mass, more preferably from 0.001 to 5% by mass, further preferably from 0.01 to 4% by mass, and particularly preferably from 0.1 to 3% by mass.

[Photopolymerization initiator]

The curable resin layer (b) may further comprise a photopolymerization initiator. The photopolymerization initiator has a function of promoting the curing reaction when curing the curable resin layer (b).

The photopolymerization initiator is not particularly limited, and examples thereof include 1-hydroxy-cyclohexyl-phenyl-ketone (Irgacure 184), 2-hydroxy-2-methyl-1-phenyl-propan-1-one (Irgacure 1173), 2,4,6-trimethylbenzoyl-diphenylphosphine oxide (Irgacure TPO), bis(2,4,6-trimethylbenzoyl)-phenylphosphine oxide (Irgacure 819), 2,2'-dimethoxy-2-phenylacetophenone (Irgacure 651), oligo(2-hydroxy-2-methyl-1-[4-(1-methylvinyl)phenyl]propanone (Esacure ONE), 1-hydroxycyclohexyl-phenyl ketone (Omnirad 184), and the like. Among these, from the viewpoint of high heat resistance, it is preferable that the photopolymerization initiator comprises at least one of oligo(2-hydroxy-2-methyl-1-[4-(1-methylvinyl)phenyl]propanone (Esacure ONE) and 1-hydroxycyclohexyl-phenyl ketone (Omnirad 184), and more preferably comprises 1-hydroxycyclohexyl-phenyl ketone (Omnirad 184). The above-described photopolymerization initiators may be used alone or in combination of two or more.

The content of the photopolymerization initiator is, based on the total mass of the curable resin layer (b), preferably from 1 to 10% by mass, more preferably from 1 to 6% by mass, further preferably from 2 to 5% by mass, and particularly preferably from 2 to 4% by mass.

[Light stabilizer]

The curable resin layer (b) may further comprise a light stabilizer. The light stabilizer has a function of improving the weather resistance of the cured product.

The light stabilizer is not particularly limited, and examples thereof include a hindered amine-based light stabilizer.

Examples of the hindered amine light stabilizer include bis(1-undecaneoxy-2,2,6,6-tetramethylpiperidin-4-yl) carbonate (ADK Stab LA-81), tetrakis(1,2,2,6,6-pentamethyl-4-piperidyl)butane-1,2,3,4-tetracarboxylate (ADK Stab LA-52), tetrakis(2,2,6,6-tetramethyl-4-piperidyl)butane-1,2,3,4-tetracarboxylate (ADK Stab LA-57), 1,2,2,6,6-Pentamethyl-4-piperidyl methacrylate (ADK Stab LA-82), bis(2,2,6,6-tetramethyl-1-octyloxy-4-piperidyl)sebacate (Tinuvin 123), bis(2,2,6,6-tetramethyl-4-piperidyl)sebacate (Tinuvin 770DF), bis(1,2,2,6,6-pentamethyl-4-piperidyl)-((3,5-bis(1,1-dimethylethyl)-4-hydroxyphenyl)methyl)butyl malonate (Tinuvin 144), and the like.

Among these, it is preferable that the light stabilizer comprises a hindered amine-based light stabilizer. The above-described light stabilizers may be used alone or in combination of two or more.

The content of the light stabilizer is, based on the total mass of the curable resin layer (b), preferably from 0.1 to 15% by mass, more preferably from 0.1 to 7% by mass, further preferably from 0.3 to 5% by mass, and particularly preferably from 0.3 to 3% by mass.

[Polymerization inhibitor]

The curable resin layer (b) may further comprise a polymerization inhibitor. The polymerization inhibitor has a function of, for example, suppressing a polymerization reaction of the curable resin layer (b) caused by light, heat, and the like, and improving the storage stability of the multilayer body.

The polymerization inhibitor is not particularly limited, and examples thereof include phenothiazine, mequinol (4-methoxyphenol), hydroquinone, 2-hydroxynaphthoquinone, N-isopropyl-N'-phenyl-p-phenylenediamine, 6-ethoxy-2,2,4-trimethyl-1,2-dihydroquinoline, 2,2,6,6-tetramethyl-4-oxopiperidine-1-oxyl, 2-mercaptobenzimidazole, and the like.

Among these, it is preferable that the polymerization inhibitor comprises at least one of phenothiazine, mequinol, and hydroquinone, and more preferably comprises phenothiazine. The above-described polymerization inhibitors may be used alone or in combination of two or more.

The content of the polymerization inhibitor is, based on the total mass of the curable resin layer (b), preferably from 0.001 to 5% by mass, more preferably from 0.01 to 4% by mass, and further preferably from 0.01 to 3% by mass.

[Additives]

The curable resin layer (b) may further contain an additive.

The additive is not particularly limited, and examples thereof include a heat stabilizer, an antioxidant, a flame retardant, a flame retarding aid, an ultraviolet absorber, a release agent, a colorant, an antistatic agent, a fluorescent brightener, an antifogging agent, a flow improver, a plasticizer, a dispersant, an antibacterial agent, and the like. These additives may be used alone or in combination of two or more.

[Structure of curable resin layer (b)]

The curable resin layer (b) is in an uncured state, and for example, the (meth)acryloyl polymer has a polymerizable functional group (such as a (meth)acryloyl group, an epoxy group, or a hydroxyl group). The curable resin layer (b) has good conformability, and cracks are unlikely to occur in the curable resin layer (b) after forming, so it has excellent three-dimensional formability. However, for example, the (meth)acryloyl polymer in the curable resin layer (b) may, within a scope that does not hinder the effects of the present invention, have a crosslinked structure due to a curing reaction of some of the (meth)acryloyl groups during the forming step.

The thickness of the curable resin layer (b) is preferably 1 μm or more, more preferably 3 μm or more, and from the viewpoint of increased hardness, is further preferably 5 μm or more, particularly preferably from 5 to 30 μm, and most preferably from 5 to 10 μm.

<Acrylic layer (c)>

The multilayer body may further comprise an acrylic layer (c). The acrylic layer (c) has a function of, for example, improving the impact resistance of the multilayer body and the hardness of the cured product.

In one embodiment, the multilayer body is preferably obtained by layering the base material layer (a), the acrylic layer (c), and the curable resin layer (b) in that order. By arranging the acrylic layer (c) between the base material layer (a) and the curable resin layer (b), adhesion between the base material layer (a) and the curable resin layer (b) can be improved.

The acrylic layer (c) preferably comprises a (meth)acrylic resin.

[(Meth)acrylic resin]

The (meth)acrylic resin is not particularly limited as long as it is a polymer of a (meth)acrylic acid ester.

Examples of the (meth)acrylic acid ester include methyl (meth)acrylate, ethyl (meth)acrylate, butyl (meth) acrylate, and the like.

The (meth)acrylic resin may be a homopolymer or a copolymer.

Among these, from the viewpoints of high transparency, excellent formability, and the like, it is preferable that the (meth)acrylic resin comprise a polymethyl methacrylate (PMMA) resin. The above-described (meth)acrylic resins may be used alone or in combination of two or more.

The content of the (meth)acrylic resin is, based on the total mass of the acrylic layer (c), preferably 60% by mass or more, more preferably 80% by mass or more, further preferably 90% by mass or more, and particularly preferably from 90 to 100% by mass.

[Additives]

The acrylic layer (c) may further comprise an additive.

The additive is not particularly limited, and examples thereof include an ultraviolet absorber, an antioxidant, a color inhibitor, inorganic particles, and the like. These additives may be used alone or in combination of two or more.

[Structure of acrylic layer (c)]

The thickness of the acrylic layer (c) is preferably 5 μm or more, more preferably 10 μm or more, and from the viewpoint of further increased hardness of the cured product, is further preferably 20 μm or more, particularly preferably 30 μm or more, very preferably from 30 to 80 μm, and most preferably from 40 to 60 μm.

2. Method for producing multilayer body

According to one aspect of the present invention, a method for producing a multilayer body is provided.
In one embodiment, the method for producing a multilayer body includes a step (1-1) of forming a base material layer (a) from a first resin composition, and a step (2-1) of forming a curable resin layer (b) from a second resin composition on the base material layer (a).
In this case, instead of step (1-1), a step (1-2) may be included, in which the first resin composition and a third resin composition are co-extruded to form a precursor comprising the base material layer (a) and the acrylic layer (c). When step (1-2) is included, a step (2-2) is included instead of step (2-1), in which the curable resin layer (b) is formed from the second resin composition on the acrylic layer (c) on the precursor.
In this case, the first resin composition comprises a bisphenol A polycarbonate.
The second resin composition comprises a (meth)acryloyl polymer having an acrylic equivalent of from 200 to 600 g/mol.
The third resin composition comprises a (meth)acrylic resin.
Each step is now described below.

<Step (1-1)>

Step (1-1) is a step of forming the base material layer (a) from a first resin composition.

[First resin composition]

The first resin composition comprises a bisphenol A polycarbonate. In addition, the first resin composition may further comprise a plasticizer, an additive, and the like.
The bisphenol A polycarbonate, plasticizer, and additive(s) used are as described above.
The composition of the first resin composition is appropriately adjusted so that the base material layer (a) has the desired structure.

[Method for forming base material layer (a)]

The method for forming the base material layer (a) is not particularly limited, but it is preferable to extrude the first resin composition.
The melting temperature of the first resin composition is not particularly limited, but it is preferably from 230 to 320°C, and more preferably from 260 to 300°C.
The cooling temperature of the first resin composition is not particularly limited, but it is preferably from 50 to 200°C, and more preferably from 70 to 150°C.

<Step (1-2)>

Step (1-2) is a step of co-extruding the first resin composition and the third resin composition to form a precursor comprising the base material layer (a) and the acrylic layer (c).

[First resin composition]

The first resin composition is the same as that used in step (1-1).

[Third resin composition]

The third resin composition comprises a (meth)acrylic resin. The third resin composition may further comprise an additive and the like.
The composition of the third resin composition is appropriately adjusted so that the acrylic layer (c) has the desired structure.

[Method for forming precursor]

The precursor is formed by co-extruding the first resin composition and the third resin composition. This allows the formation of a precursor comprising the base material layer (a) and the acrylic layer (c).
The melting temperature and cooling temperature of the first resin composition are the same as in step (1-1).
The melting temperature of the third resin composition is not particularly limited, but it is preferably from 200 to 280°C, and more preferably from 210 to 260°C.
The cooling temperature of the third resin composition is not particularly limited, but it is preferably from 50 to 200°C, and more preferably from 70 to 150°C.

<Step (2-1)>

Step (2-1) is a step of forming the curable resin layer (b) from the second resin composition on the base material layer (a) formed in step (1-1).

[Second resin composition]

The second resin composition comprises a (meth)acryloyl polymer having an acrylic equivalent of from 200 to 600 g/mol. In addition, the second resin composition may further comprise a polyfunctional acrylate compound, inorganic particles, a leveling agent, a photopolymerization initiator, a light stabilizer, a polymerization inhibitor, an additive, a dilution solvent, and the like.
The dilution solvent is not particularly limited, and examples thereof include acetone, methyl ethyl ketone, cyclohexanone, and the like. These dilution solvents may be used alone or in combination of two or more.
The composition of the second resin composition is appropriately adjusted so that the curable resin layer (b) has the desired structure.

[Method for forming curable resin layer (b)]

The method for forming the curable resin layer (b) is not particularly limited, but it is preferable to use a method in which the second resin composition is coated onto the base material layer (a).
Examples of the method for applying the second resin composition include spray coating, spin coating, bar coating, gravure coating, die coating, and the like.
The coating film formed by application is preferably dried. For example, the curable resin layer (b) can be obtained by carrying out drying to volatilize the dilution solvent that may be contained in the second resin composition.
The temperature for drying the coating film is preferably from 50 to 200°C, and more preferably from 70 to 150°C.

<Step (2-2)>

Step (2-2) is a step of forming the curable resin layer (b) from the second resin composition on the acrylic layer (c) in the precursor formed in step (1-2), and can be performed in the same manner as step (2-1).

3. Cured product

According to one embodiment of the present invention, a cured product is provided. The cured product is obtained by curing the multilayer body described above. As used herein, "curing the multilayer body" means curing the curable resin layer (b) of the multilayer body to obtain a cured film. In addition, "cured film" means a cured film (single layer film) obtained by curing the curable resin layer (b). Further, "cured product" means a multilayer product of two or more layers comprising the cured film as well as each layer derived from the multilayer body (such as the base material layer (a)).
In one embodiment, the cured product comprises the base material layer (a) and a cured film of the curable resin layer (b).
In another embodiment, the cured product comprises the base material layer (a), a cured film of the curable resin layer (b), and the acrylic layer (c). The cured product is preferably layered in order of the base material layer (a) - acrylic layer (c) - cured film of the curable resin layer (b).
In this case, the structure of the base material layer (a) and the acrylic layer (c) is usually the same as the structure in the multilayer body.
The cured film of the curable resin layer (b) has high hardness. As a result, the cured product can have high scratch resistance, chemical resistance, and the like. In one embodiment, the cured product can have high fingerprint wipability, weather-resistant adhesive properties, and the like.

Since the cured product can be used as a thermoforming film (functional film, decorative film), it is preferable to form the cured product so as to cover the surface of the formed article. That is, in one embodiment, there is provided a formed article containing a thermoforming film that comprises a formed article and the cured product of the present invention arranged on the surface of the formed article.

The formed article is not particularly limited, but is preferably a formed article having an uneven surface. Examples of the formed article include goggles, sinks, organs, beds, and vehicle housings, and the like.

In a preferred embodiment, the formed article is a formed article having an uneven surface and the formed article is subjected to three-dimensional decoration forming (TOM forming) of the multilayer body, and accordingly there is provided a three-dimensional decoration formed article comprising a formed article having an uneven surface and a multilayer body arranged on the uneven surface.

4. Method for producing cured product

According to one aspect of the present invention, a method for producing a cured product is provided. The method for producing the cured product includes a curing step of curing the multilayer body described above. The method for producing the cured product may further include a forming step of three-dimensionally forming a multilayer body on the surface of a formed article.

[Forming step]

The forming step is a step of three-dimensionally forming a multilayer body on the surface of a formed article. The curable resin layer (b) of the multilayer body is in an uncured state, so the three-dimensional formability of the multilayer body is high. As a result, even in the case of three-dimensional forming, the conformability of the multilayer body is high, and cracks are unlikely to occur in the multilayer body after forming.

(Formed article)

The formed article is not particularly limited, and, for example, the articles described above may be used.

(Multilayer body)

The bodies described above may be used as the multilayer body.

(Three-dimensional forming)

An example of the three-dimensional forming is three-dimensional decoration (TOM) forming.

As described above, the three-dimensional decoration (TOM) forming method includes (1) a vacuum step in which a lower chamber having an opening at an upper portion in which a formed article having an uneven surface is arranged, an upper chamber having an opening at a lower portion in which a heater is arranged, and the multilayer body according to the present invention sandwiched between the lower chamber and the upper chamber are made airtight, and then the multilayer body is placed under vacuum conditions, (2) a heating step in which the multilayer body is heated using the heater, (3) a contacting step in which the formed article having unevenness is brought into contact with the heated multilayer body, (4) an upper chamber de-vacuum step in which the pressure in the upper chamber is changed to atmospheric pressure, and (5) a lower chamber de-vacuum step in which the pressure in the lower chamber is changed to atmospheric pressure.

The method may further include, after the upper chamber de-vacuum step, an upper chamber pressurization step in which compressed air is introduced into the upper chamber. The method may also further include, after the lower chamber de-vacuum step, a trimming step in which a portion of the multilayer body arranged on the uneven surface is removed.

[Curing step]

The curing step is a step of curing the multilayer body. More specifically, the curing step is a step of curing the curable resin layer (b) in the multilayer body by a curing reaction to obtain a cured film of the curable resin layer (b).

The curing reaction is not particularly limited, but is preferably performed by irradiating active energy rays.

The active energy rays can be, for example, ultraviolet rays, an electron beam, radiation, and the like, and are preferably ultraviolet rays.

The amount of irradiation of the active energy rays is not particularly limited, but the cumulative exposure amount

at an ultraviolet wavelength of 365 nm is preferably from 100 to 5000 $mJ/cm^2$, and more preferably from 300 to 3000 $mJ/cm^2$

## Examples

The present invention will now be specifically described below with reference to examples, but the present invention is not limited to these.

### 1. Raw materials

(1) Polycarbonate resin

T-1380: Bisphenol A (BPA) polycarbonate resin using parahydroxybenzoic acid hexadecyl ester (p-HBAHE) as an end-capping agent (manufactured by Mitsubishi Gas Chemical Company, Inc., viscosity average molecular weight: 25,500, Tig: 126°C, Tmg: 131°C)
T-1300: Bisphenol A (BPA) polycarbonate resin using parahydroxybenzoic acid hexadecyl ester (p-HBAHE) as an end-capping agent (manufactured by Mitsubishi Gas Chemical Company, Inc., viscosity average molecular weight: 30,500, Tig: 132°C, Tmg: 136°C)
S-1000: Bisphenol A (BPA) polycarbonate resin using para-tertiary butylphenol (p-t-BPh) as an end-capping agent (manufactured by Mitsubishi Engineering-Plastics Corporation, viscosity average molecular weight: 25,000, Tig: 147°C, Tmg: 151°C) FPC-0330: Bisphenol C (BPC) polycarbonate resin using para-tertiary butylphenol (p-t-BPh) as an end-capping agent (manufactured by Mitsubishi Gas Chemical Company, Inc., viscosity average molecular weight: 32,000, Tig: 123°C, Tmg: 126°C)

The structures of the parahydroxybenzoic acid hexadecyl ester (p-HBAHE) and para-tertiary butylphenol (p-t-BPh) are as follows.

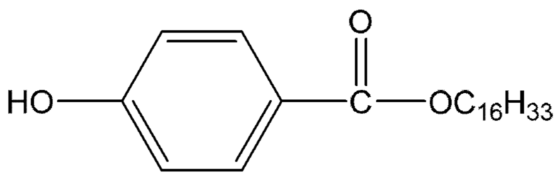
p-HBAHE

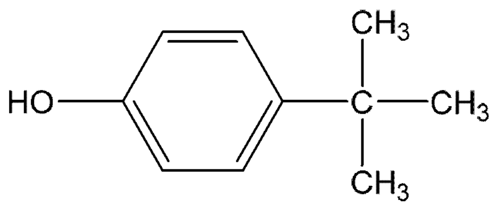
p-t-BPh

(2) Plasticizer

Placcel H1P: Polycaprolactone (PCL) (manufactured by Daicel Corporation) SKYGREEN (R) J2003: PCTG (glycol-modified polycyclohexylene dimethylene terephthalate) (manufactured by SK Chemicals Co., Ltd., a polyester in which 80 mol% of the ethylene glycol, the raw material for PET, has been replaced with cyclohexanedimethanol)
PX200: Resorcinol poly(di-2,6-xylyl)phosphate (manufactured by Daihachi Chemical Industry Co., Ltd.)

(3) PMMA (polymethyl methacrylate) resin

Delpet 80HD: PMMA resin (manufactured by Asahi Kasei Corporation, methyl methacrylate (MMA): methyl acrylate = 99% by mass: 1% by mass, weight average molecular weight: 124,600)

(4) Curable resin raw material

SMP-360A: Acryloyl group-containing polymer (manufactured by Kyoeisha Chemical Co., Ltd., acrylic equivalent 360 g/mol)

SMP-220A: Acryloyl group-containing polymer (manufactured by Kyoeisha Chemical Co., Ltd., acrylic equivalent 220 g/mol)
SMP-550A: Acryloyl group-containing polymer (manufactured by Kyoeisha Chemical Co., Ltd., acrylic equivalent 550 g/mol)
PGM-AC4130Y: Nanosilica (manufactured by Nissan Chemical Corporation, average particle size 45 nm, surface acrylic treatment, PGM dispersion)
MEK-AC2140Z: Nanosilica (manufactured by Nissan Chemical Corporation, average particle size 12 nm, surface acrylic treatment, MEK dispersion)
MEK-AC5140Z: Nanosilica (manufactured by Nissan Chemical Corporation, average particle size 80 nm, surface acrylic treatment, MEK dispersion)
Omnirad 184: Photopolymerization initiator (manufactured by IGM RESINS B.V.) ADK Stab LA-81: Hindered amine light stabilizer (manufactured by ADEKA Corporation)
Phenothiazine (PTZ): Polymerization inhibitor (manufactured by Fujifilm Wako Pure Chemical Corporation)
RS-90: Fluorine-based leveling agent (manufactured by DIC Corporation) BYK-UV3500: Silicone-based leveling agent (manufactured by BYK)

2. Measurement methods

(1) Glass transition temperature

The glass transition temperature (Tg) of various resins and resin compositions was measured by performing two cycles of heating and cooling according to the differential scanning calorimetry (DSC) measurement conditions below, and measuring the glass transition temperature of the second heating cycle.

The intersection of the straight line (straight line A) extending the low-temperature side baseline to the high-temperature side and the tangent (tangent B) to the inflection point was defined as the initiation glass transition temperature (Tig). The intersection of the straight line (line C) extending the high-temperature side baseline to the low-temperature side and the tangent (tangent B) to the inflection point was defined as the end glass transition temperature (Teg). The midpoint between the initiation glass transition temperature (Tig) and the end glass transition temperature (Teg) was defined as the midpoint glass transition temperature (Tmg).

Start temperature: 30°C
Heating rate: 10 °C/min
End-point temperature: 250°C
Cooling rate: 20 °C/min
Measuring device: Differential scanning calorimeter "DSC7020" (manufactured by Hitachi High-Tech Science Corporation)

(2) Viscosity average molecular weight

The viscosity average molecular weight was calculated from Schnell's viscosity formula. Specifically, first, the intrinsic viscosity [η] (unit: dL/g) of the resin was measured using methylene chloride as a solvent. The temperature was set at 25°C. The specific viscosity [$\eta_{sp}$] was measured at each solution concentration [C] (g/dL) using an Ubbelohde viscometer. The intrinsic viscosity was calculated from the obtained specific viscosity value and concentration using the following formula.

$$\eta = \lim_{c \to 0} \eta_{sp} / \mathrm{c}$$

Next, the viscosity average molecular weight [Mv] was calculated from Schnell's viscosity formula, that is, $\eta = 1.23 \times 10^{-4} Mv^{0.83}$.

(3) Weight average molecular weight

The weight average molecular weight (Mw) was measured by gel permeation chromatography.

Specifically, an LC-20AD system (manufactured by Shimadzu Corporation) was used as the gel permeation chromatography apparatus, and an LF-804 (manufactured by Shodex) was connected as the column. The column temperature was set at 40°C. An RID-10A (manufactured by Shimadzu Corporation) was used as the RI detector.

Chloroform was used as the eluent, and a calibration curve was created using standard polystyrene (manufactured by Tosoh Corporation).

(4) Acrylic equivalent

The acrylic equivalent was calculated using the formula "molecular weight / number of (meth)acryloyl groups".

(5) Average particle size

The average particle size was calculated by randomly selecting 30 inorganic particles observed with a transmission electron microscope (TEM), taking the maximum distance between two points on the outer surface of each particle as the particle size, and then calculating the average of these.

(6) Charpy impact strength

The Charpy impact strength of the base material layer (a) was measured in accordance with JIS K 7111-1:2012.
Specifically, the polycarbonates and plasticizers used in Examples 1 to 22 and Comparative Examples 1 to 8 were melt-kneaded at a cylinder temperature of 260°C using a vented twin-screw injection molding machine ("PE-100" manufactured by Sodick Co., Ltd., intermeshing co-rotating type having a twin-screw diameter of 29 mm, plunger diameter 28 mm) to produce a molded body (test piece) having a length of 80 mm, width of 10 mm, and thickness of 3 mm at a mold temperature of 70°C. Then, a notched Charpy impact test was performed in accordance with JIS K7111-1:2012 to measure the Charpy impact strength, with units expressed in $kJ/m^2$.

3. Production of multilayer body

[Example 1]

A multilayer body was produced in which the base material layer (a), the acrylic layer (c), and the curable resin layer (b) were layered in that order.

(1) Production of multilayer body (precursor) of base material layer (a) and acrylic layer (c)

A T-1380 polycarbonate resin was melt-kneaded at a cylinder temperature of 280°C using a vented twin-screw extruder TEX30$\alpha$ (manufactured by The Japan Steel Works, Ltd.) having a screw diameter of 32 mm and a screw L/D of 31.5, and pellets were obtained by strand cutting.
A multilayer body (precursor) consisting of the base material layer (a) and the acrylic layer (c) was produced using the pellets and a PMMA (polymethyl methacrylate) resin Delpet 80HD.
Specifically, using a multi-layer extrusion apparatus having a single screw extruder with a shaft diameter of 32 mm, a single screw extruder with a shaft diameter of 65 mm, a feed block connected to all the extruders, and a 650 mm wide T-die connected to the feed block, the PMMA resin (Delpet 80HD) was continuously fed into the single screw extruder with a shaft diameter of 32 mm at a cylinder temperature of 240°C and extruded, and the above-described pellets were continuously fed into the single screw extruder with a shaft diameter of 65 mm at a cylinder temperature of 280°C and extruded. At this time, the discharged amount of the PMMA resin was controlled so that the thickness of the acrylic layer (c) was 35 $\mu$m, and the discharged amount of the pellets was controlled so that the thickness of the base material layer (a) was 90 $\mu$m. The feed block connected to all extruders was equipped with two-type, two-layer distribution pins, and the flows were layered and extruded into a sheet using a T-die. The sheet was then cooled while transferring a mirror surface using three mirror-finish rolls set at temperatures of 100°C, 90°C, and 120°C from the upstream side, to thereby produce a multilayer body (precursor) consisting of a base material layer (a) containing the polycarbonate resin T-1380 and an acrylic layer (c) containing the PMMA resin Delpet 80HD.

(2) Production of multilayer body

A multilayer body was produced by forming the curable resin layer (b) on the acrylic layer (c) of the multilayer body (precursor) consisting of the base material layer (a) and acrylic layer (c).
70 parts by mass of acryloyl group-containing polymer SMP-360A, 30 parts by mass of nanosilica PGM-AC4130Y,3 parts by mass of photopolymerization initiator Omnirad 184, 1 part by mass of fluorine-based leveling agent RS-90, and cyclohexanone as a dilution solvent were mixed by stirring to obtain a curable resin composition. Cyclohexanone was added in an amount such that the concentration of solids in the curable resin composition was 25% by weight.

The curable resin composition was coated on the acrylic layer (c) of the multilayer body consisting of the base material layer (a) and acrylic layer (c) with a bar coater so that the film thickness after drying would be 4 μm, and the resulting coating film was dried at 130°C for 3 minutes to form the curable resin layer (b). As a result, a multilayer body in which the base material layer (a), the acrylic layer (c), and the curable resin layer (b) were layered in that order was produced.

[Examples 2 to 20]

Multilayer bodies were produced in the same manner as in Example 1, with the base material layer (a), acrylic layer (c), and curable resin layer (b) layered in that order, except that the types and amounts of raw materials used and the thickness of each layer were changed as shown in Tables 1-1 and 1-2.

[Example 21]

A multilayer body consisting of the base material layer (a) and curable resin layer (b) was produced.

(1) Production of monolayer film consisting of a base material layer (a)

A monolayer film consisting of the base material layer (a) was produced using pellets of the polycarbonate resin T-1380 that were obtained in the same manner as in Example 1.

Specifically, using a T-die melt extruder built including a vented twin-screw extruder TEX30α (manufactured by The Japan Steel Works, Ltd.) having a barrel diameter of 32 mm and a screw L/D of 31.5, the pellets were continuously fed and extruded at a discharge rate of 10 kg/h under conditions of a screw rotation speed of 63 rpm and a cylinder temperature of 280°C. The pellets were extruded into a sheet using the T-die connected to the extruder, and cooled while transferring a mirror surface using three mirror-finish rolls set at temperatures of 120°C, 120°C, and 120°C from the upstream side, to thereby obtain a monolayer film consisting of a base material layer (a) containing the polycarbonate resin T-1380.

(2) Production of multilayer body

The curable resin layer (b) was formed on a base material layer (a) in the same manner as in Example 1 so as to have the composition shown in Table 1, to thereby produce a multilayer body in which the base material layer (a) and the curable resin layer (b) were layered.

[Example 22 and Comparative Examples 1 to 8]

Multilayer bodies were produced in the same manner as in Example 1 or 21, with the base material layer (a), acrylic layer (c), and curable resin layer (b) layered in that order, or with the base material layer (a) and curable resin layer (b) layered, except that the types and amounts of raw materials used and the thickness of each layer were changed as shown in Table 1-3.

[Table 1-1]

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Layer (a) | PC resin | T-1380 | 100 | 100 | 100 | 100 | 100 | 100 | 100 | 100 | 100 | 100 |
| | Tig (°C) | | 126 | 126 | 126 | 126 | 126 | 126 | 126 | 126 | 126 | 126 |
| | Tmg (°C) | | 131 | 131 | 131 | 131 | 131 | 131 | 131 | 131 | 131 | 131 |
| | Thickness ($\mu$m) | | 90 | 90 | 90 | 90 | 90 | 90 | 90 | 90 | 90 | 90 |
| | Charpy impact strength (kJ/$m^2$) | | 65 | 65 | 65 | 65 | 65 | 65 | 65 | 65 | 65 | 65 |
| Layer (c) | PMMA resin | 80HD | 100 | 100 | 100 | 100 | 100 | 100 | 100 | 100 | 100 | 100 |
| | Thickness ($\mu$m) | | 35 | 35 | 35 | 35 | 35 | 35 | 35 | 35 | 35 | 35 |
| Layer (b) | Methacrylic polymer | SMP-360A | 70 | | | 100 | 70 | 70 | 70 | 70 | 70 | 70 |
| | | SMP-220A | | 70 | | | | | | | | |
| | | SMP-550A | | | 70 | | | | | | | |
| | Silica | PGM-AC4130Y | 30 | 30 | 30 | | | | 30 | 30 | 30 | 30 |
| | | MEK-AC2140Z | | | | | 30 | | | | | |
| | | MEK-AC-5140Z | | | | | | 30 | | | | |
| | Photopolymerization initiator | Omnirad 184 | 3 | 3 | 3 | 3 | 3 | 3 | 3 | 3 | 3 | 3 |
| | Light stabilizer | LA-81 | | | | | | | 1 | | | |
| | Polymerization inhibitor | PTZ | | | | | | | | 0.075 | | |
| | Leveling agent | RS-90 | 1 | 1 | 1 | 1 | 1 | 1 | 1 | 1 | | 1 |
| | | BYK-UV3500 | | | | | | | | | 1 | |
| | Thickness ($\mu$m) | | 4 | 4 | 4 | 4 | 4 | 4 | 4 | 4 | 4 | 8 |

[Table 1-2]

| | | | Example 11 | Example 12 | Example 13 | Example 14 | Example 15 | Example 16 | Example 17 | Example 18 | Example 19 | Example 20 |
|---|---|---|---|---|---|---|---|---|---|---|---|---|
| Layer (a) | PC resin | T-1380 | 100 | | 100 | 100 | 100 | 100 | 100 | 100 | 100 | 100 |
| | | T-1300 | | 99 | | | | | | | | |
| | Plasticizer | PCL | | 1 | | | | | | | | |
| | Tig (°C) | | 126 | 127 | 126 | 126 | 126 | 126 | 126 | 126 | 126 | 126 |
| | Tmg (°C) | | 131 | 131 | 131 | 131 | 131 | 131 | 131 | 131 | 131 | 131 |
| | Thickness (μm) | | 90 | 90 | 145 | 50 | 245 | 230 | 245 | 200 | 245 | 320 |
| | Charpy impact strength (kJ/$m^2$) | | 65 | 63 | 65 | 65 | 65 | 65 | 65 | 65 | 65 | 65 |
| Layer (c) | PMMA resin | 80HD | 100 | 100 | 100 | 100 | 100 | 100 | 100 | 100 | 100 | 100 |
| | Thickness (μm) | | 35 | 35 | 35 | 7 | 7 | 23 | 23 | 55 | 55 | 55 |
| Layer (b) | Methacrylic polymer | SMP-360A | 70 | 70 | 70 | 70 | 70 | 70 | 70 | 70 | 70 | 70 |
| | Silica | PGM-AC4130Y | 30 | 30 | 30 | 30 | 30 | 30 | 30 | 30 | 30 | 30 |
| | Photopolymerization initiator | Omnirad 184 | 3 | 3 | 3 | 3 | 3 | 3 | 3 | 3 | 3 | 3 |
| | Leveling agent | RS-90 | 1 | 1 | 1 | 1 | 1 | 1 | 1 | 1 | 1 | 1 |
| | Thickness (μm) | | 2 | 2 | 4 | 8 | 4 | 4 | 4 | 4 | 4 | 4 |

[Table 1-3]

| | | | Example 21 | Example 22 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|---|
| Layer (a) | PC resin | T-1380 | 100 | 100 | 100 | | | | | | | |
| | | S-1000 | | | | 100 | 100 | 100 | 95 | 80 | 95 | |
| | | FPC-0330 | | | | | | | | | | 100 |
| | Plasticizer | PCL | | | | | | | 5 | | | |
| | | PCTG | | | | | | | | 20 | | |
| | | PX200 | | | | | | | | | 5 | |
| | Tig (°C) | | 126 | 126 | 126 | 147 | 147 | 147 | 120 | 128 | 127 | 123 |
| | Tmg (°C) | | 131 | 131 | 131 | 151 | 151 | 151 | 124 | 132 | 133 | 126 |
| | Thickness (μm) | | 50 | 50 | 50 | 90 | 50 | 90 | 90 | 90 | 90 | 90 |
| | Charpy impact strength (kJ/m²) | | 65 | 65 | 65 | 84 | 84 | 84 | 6 | 14 | 5 | 22 |
| Layer (c) | PMMA resin | 80HD | | | | 100 | | 100 | 100 | 100 | 100 | 100 |
| | Thickness (μm) | | | | | 35 | | 35 | 35 | 35 | 35 | 35 |
| Layer (b) | Methacrylic polymer | SMP-360-A | 70 | 70 | | | 70 | 70 | 70 | 70 | 70 | 70 |
| | Silica | PGM-AC4130Y | 30 | 30 | | | 30 | 30 | 30 | 30 | 30 | 30 |
| | Photopolymerization initiator | Omnirad 184 | 3 | 3 | | | 3 | 3 | 3 | 3 | 3 | 3 |
| | Leveling agent | RS-90 | 1 | 1 | | | 1 | 1 | 1 | 1 | 1 | 1 |
| | Thickness (μm) | | 4 | 8 | | | 4 | 4 | 2 | 2 | 2 | 2 |

4. Evaluations

Various evaluations were performed on the multilayer bodies produced in Examples 1 to 22 and Comparative Examples 1 to 8.

<TOM formability>

TOM forming was performed using the multilayer bodies, and conformability and cracks were evaluated.
The multilayer body was cut to a size of 330 mm × 330 mm, and an adhesive layer was attached to the base material layer (a). A spare lens for safety goggles (manufactured by TRUSCO: product number TSG-005SP) was used as an adherend. The multilayer body with the adhesive layer and the adherend were set in the upper and lower boxes of a TOM forming machine NGF-0709-S (manufactured by Fu-se Vacuum Forming Ltd.), and the pressure in the upper and lower boxes was reduced to 0.1 kPa, after which the multilayer body with the adhesive layer was heated to 140°C or 150°C. Then, compressed air of 0.3 MPa was introduced only into the upper box to obtain a TOM formed body.
The conformability of the TOM formed body was evaluated as follows. The evaluation was performed by five experts and judged by majority vote. The results are shown in Table 2 below.

Circle: The multilayer body conformed to the shape of the adherend.
Triangle: Some of the multilayer body did not conform to the shape of the adherend.
Cross: The multilayer body did not conform to the shape of the adherend.

Cracks in the TOM formed body were evaluated as follows. The evaluation was performed by five experts and judged by majority vote. The results are shown in Table 2 below.

Circle: No cracks in the multilayer body.
Triangle: Fine cracks were observed on the surface of the multilayer body.
Cross: Large cracks were observed in the multilayer body.

<Pencil hardness>

The pencil strength of a cured product obtained by curing the multilayer body was evaluated.
The cured product was manufactured as follows.
That is, the curable resin layer (b) of the multilayer body was irradiated with ultraviolet rays using a conveyor-type UV irradiator ECS-401GX (manufactured by Eye Graphics Company). At this time, the ultraviolet rays irradiation was performed at 700 $mJ/cm^2$ (UV illuminance meter manufactured by Oak Co., Ltd., measurement wavelength 360 nm). As a result, a cured product was produced in which the curable resin layer (b) of the multilayer body had been cured.
The pencil hardness of the cured product of the curable resin layer (b) was measured based on the conditions of JIS K 5600-5-4:1999, and evaluation was given according to the hardest pencil number that did not cause scratches. The obtained results are shown in Table 2 below.
The order of pencil hardness increases from 6B, 5B, 4B, 3B, 2B, B, HB, F, H, 2H, 3H, 4H, 5H, 6H, 7H, 8H, and 9H.

<Chemical resistance>

The chemical resistance of a cured product obtained by curing the multilayer body was evaluated. The cured product used was the same as that produced for the pencil hardness evaluation.
Neutrogena SPF 70 (a sunscreen containing homosalate, octocrylene, octisalate, and avobenzone) was applied to the surface of the cured product of the curable resin layer (b), which was left to stand at 80°C for 1 hour. The surface was then washed with a neutral detergent, and the appearance was evaluated based on the following criteria. The obtained results are shown in Table 2 below.

Circle: No abnormalities on the surface.
Cross: Whitening was observed on the surface.

<Scratch resistance>

The scratch resistance of a cured product obtained by curing the multilayer body was evaluated. The cured product used was the same as that produced for the pencil hardness evaluation.
The surface of the cured product of the curable resin layer (b) was scratched by moving #0000 steel wool back

and forth 15 times under a pressure of 100 gf/cm$^2$. The appearance after scratching was evaluated based on the following criteria. The obtained results are shown in Table 2 below.

Double circle: No scratches could be seen.
Circle: Very slight scratches could be seen.
Triangle: Some scratches could be seen.
Cross: Scratches could be seen over the entire surface.

<Weather-resistant adhesive properties>

The weather-resistant adhesive properties of a cured product obtained by curing the multilayer body were evaluated. The cured product used was the same as that produced for the pencil hardness evaluation.
The surface of the cured product of the curable resin layer (b) was irradiated with light under the following conditions.

Apparatus: SUV-W161 (manufactured by Iwasaki Electric Co., Ltd.)
Light source: Metal halide lamp
Test environment: 63°C (black panel temperature), 50% RH
Illuminance: 50 mW/cm$^2$ (wavelength 365nm)
Irradiation cycle: 24 hours (continuous irradiation)

The weather-resistant adhesive properties of the surface of the cured product of the curable resin layer (b) after irradiation were evaluated based on the following criteria in accordance with JIS K5600-5-6:1999. The obtained results are shown in Table 2 below.

Double circle: The edges of the cut were completely smooth and there was no peeling in any of the grids.
Circle: Peeling occurred in less than 40% of the squares.
Cross: Peeling occurred in 40% or more of the squares.

<Fingerprint wipability>

The fingerprint wipability of a cured product obtained by curing the multilayer body was evaluated. The cured product used was the same as that produced for the pencil hardness evaluation.
A fingerprint was placed on the surface of the cured product of the curable resin layer (b). The fingerprint was then wiped off with a cloth, and the ease of wiping off the fingerprint was evaluated based on the following criteria. The obtained results are shown in Table 2 below.

Circle: The fingerprint disappeared after 2 to 4 wipes.
Triangle: The fingerprint disappeared after 5 wipes.
Cross: The fingerprint disappeared after 6 or more wipes.

[Table 2]

| | TOM formability | | | | Evaluation of cured product | | | | |
|---|---|---|---|---|---|---|---|---|---|
| | Cracks | | Conformability | | Pencil hardness | Chemical resistance | Scratch resistance | Weather-resistant adhesive properties | Fingerprint wipability |
| | 140°C | 150°C | 140°C | 150°C | | | | | |
| Example 1 | O | Δ | O | O | H | O | O | O | ○ |
| Example 2 | O | Δ | O | O | 2H | O | ⊙ | O | ○ |
| Example 3 | O | Δ | O | O | F | O | Δ | O | ○ |
| Example 4 | O | Δ | O | O | HB | O | × | O | ○ |
| Example 5 | O | Δ | O | O | H | O | Δ | O | ○ |
| Example 6 | O | Δ | O | O | H | O | Δ | O | ○ |

(continued)

| | TOM formability | | | | Evaluation of cured product | | | | |
|---|---|---|---|---|---|---|---|---|---|
| | Cracks | | Conformability | | Pencil hardness | Chemical resistance | Scratch resistance | Weather-resistant adhesive properties | Fingerprint wipability |
| | 140°C | 150°C | 140°C | 150°C | | | | | |
| Example 7 | O | Δ | O | O | H | O | O | ⊙ | ○ |
| Example 8 | O | O | O | O | H | O | O | O | ○ |
| Example 9 | O | Δ | O | O | H | O | O | O | Δ |
| Example 10 | O | Δ | O | O | 2H | O | O | O | ○ |
| Example 11 | O | Δ | O | O | H | O | O | O | ○ |
| Example 12 | O | Δ | O | O | H | O | O | O | ○ |
| Example 13 | O | Δ | O | O | H | O | O | O | ○ |
| Example 14 | O | Δ | O | O | HB | O | O | O | ○ |
| Example 15 | O | Δ | O | O | HB | O | O | O | ○ |
| Example 16 | O | Δ | O | O | H | O | O | O | ○ |
| Example 17 | O | Δ | O | O | H | O | O | O | ○ |
| Example 18 | O | Δ | O | O | 3H | O | O | O | ○ |
| Example 19 | O | Δ | O | O | 3H | O | O | O | ○ |
| Example 20 | O | Δ | O | O | 3H | O | O | O | ○ |
| Example 21 | O | Δ | O | O | HB | O | O | O | ○ |
| Example 22 | O | Δ | O | O | HB | O | O | O | O |
| Comparative Example 1 | O | O | O | ○ | B | × | × | O | × |
| Comparative Example 2 | O | O | × | × | F | × | × | O | × |
| Comparative Example 3 | O | Δ | × | × | HB | O | O | O | O |
| Comparative Example 4 | O | Δ | × | × | H | O | O | O | O |
| Comparative Example 5 | × | × | O | O | H | O | O | O | O |
| Comparative Example 6 | × | × | O | O | H | O | O | O | O |
| Comparative Example 7 | × | × | O | O | H | O | O | O | O |
| Comparative Example 8 | × | × | O | O | 3H | O | O | O | ○ |

The results in Table 2 show that the multilayer bodies of Examples 1 to 22 have excellent three-dimensional formability. In addition, the cured products obtained by curing the multilayer bodies of Examples 1 to 22 have high hardness.

## Claims

**1.** A multilayer body comprising:

a base material layer (a); and
a curable resin layer (b) comprising a (meth)acryloyl polymer having an acrylic equivalent of from 200 to 600 g/mol, wherein
the base material layer (a) comprises 96% by mass or more of a bisphenol A polycarbonate based on the total mass of the base material layer (a), and
the base material layer (a) has a midpoint glass transition temperature (Tmg) of from 100 to 140°C.

**2.** The multilayer body according to claim 1, wherein the bisphenol A polycarbonate is a polycarbonate obtained by reacting bisphenol A, a carbonate binder, and a monohydric phenol end-capping agent represented by the following formula (1):

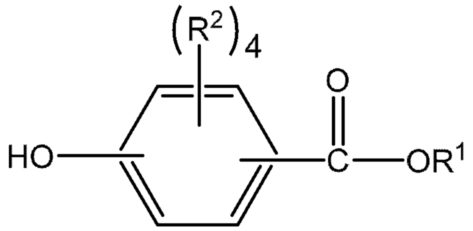
(1)

wherein $R^1$ is an alkyl group having from 8 to 36 carbon atoms, or an alkenyl group having from 8 to 36 carbon atoms, and
each $R^2$ is independently hydrogen, a halogen atom, an alkyl group having from 1 to 20 carbon atoms optionally substituted with a halogen atom or an aryl group having from 6 to 12 carbon atoms, or an aryl group having from 6 to 12 carbon atoms optionally substituted with a halogen atom, an alkyl group having from 1 to 20 carbon atoms, or an aryl group having from 6 to 12 carbon atoms.

**3.** The multilayer body according to claim 2, wherein the monohydric phenol end-capping agent represented by formula (1) comprises at least one selected from the group consisting of parahydroxybenzoic acid 2-hexyldecyl ester, parahydroxybenzoic acid hexadecyl ester, parahydroxybenzoic acid dodecyl ester, and parahydroxybenzoic acid 2-ethylhexyl ester.

**4.** The multilayer body according to claim 1, wherein the (meth)acryloyl polymer comprises a repeating unit represented by the following formula (2):

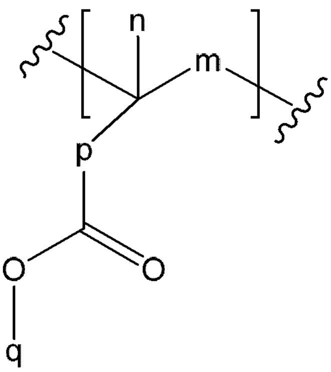
(2)

wherein m is a single bond or an alkylene group having from 1 to 4 carbon atoms,
n is hydrogen or an alkyl group having from 1 to 4 carbon atoms,
p is a single bond or an alkylene group having 1 or 2 carbon atoms, and
q is hydrogen or an alkyl group having from 1 to 12 carbon atoms optionally substituted with at least one substituent selected from an epoxy group, a hydroxyl group, and a (meth)acryloyl group.

**5.** The multilayer body according to claim 4, wherein the (meth)acryloyl polymer comprises at least one repeating unit represented by the following formulas (2-a) to (2-c):

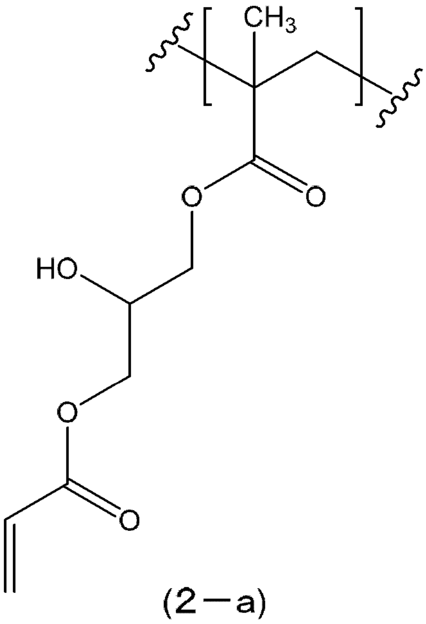

(2−a)

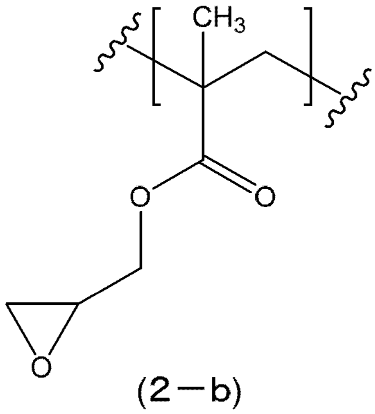

(2−b)

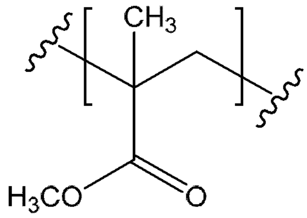

(2−c)

6. The multilayer body according to claim 1, wherein the (meth)acryloyl polymer has an acrylic equivalent of from 200 to 500 g/mol.

7. The multilayer body according to claim 1, wherein the curable resin layer (b) further comprises a leveling agent.

8. The multilayer body according to claim 7, wherein the leveling agent comprises a fluorine-based leveling agent.

9. The multilayer body according to claim 1, wherein the curable resin layer (b) further comprises inorganic particles.

10. The multilayer body according to claim 9, wherein the inorganic particles have an average particle size of from 20 to 60 nm.

11. The multilayer body according to claim 1, wherein the curable resin layer (b) further comprises a light stabilizer.

12. The multilayer body according to claim 1, wherein the curable resin layer (b) further comprises a polymerization inhibitor.

13. The multilayer body according to claim 1, wherein the curable resin layer (b) has a thickness of 5 μm or more.

14. The multilayer body according to claim 1, further comprising an acrylic layer (c),
wherein the base material layer (a), the acrylic layer (c), and the curable resin layer (b) are layered in that order.

15. The multilayer body according to claim 14, wherein the acrylic layer (c) has a thickness of 20 μm or more.

16. The multilayer body according to claim 1, which is used for vacuum forming.

17. The multilayer body according to claim 1, which is used for TOM forming.

18. A cured product obtained by curing the multilayer body according to any one of claims 1 to 17.

# INTERNATIONAL SEARCH REPORT

International application No.
**PCT/JP2024/016928**

## A. CLASSIFICATION OF SUBJECT MATTER

***B32B 27/30***(2006.01)i; ***B32B 27/36***(2006.01)i; ***C08G 64/04***(2006.01)i; ***C08J 5/18***(2006.01)i; ***C08J 7/00***(2006.01)i; ***C08J 7/18***(2006.01)i
FI: B32B27/30 A; B32B27/36 102; C08G64/04; C08J5/18; C08J7/00 304; C08J7/18

According to International Patent Classification (IPC) or to both national classification and IPC

## B. FIELDS SEARCHED

Minimum documentation searched (classification system followed by classification symbols)

B32B27/30; B32B27/36; C08G64/04; C08J5/18; C08J7/00; C08J7/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| Y | WO 2022/034837 A1 (MITSUBISHI GAS CHEMICAL COMPANY, INC.) 17 February 2022 (2022-02-17)<br>paragraphs [0086], [0094], [0107]-[0108], [0123]-[0146], examples 1-2 | 1-18 |
| Y | WO 2022/168811 A1 (MITSUBISHI GAS CHEMICAL COMPANY, INC.) 11 August 2022 (2022-08-11)<br>paragraphs [0005], [0024]-[0060] | 1-18 |
| A | JP 2013-86272 A (SUMITOMO CHEMICAL COMPANY, LIMITED) 13 May 2013 (2013-05-13)<br>claims | 1-18 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 July 2024** | **06 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/016928**

| Patent document cited in search report | Publication date (day/month/year) | Patent family member(s) | Publication date (day/month/year) |
|---|---|---|---|
| WO 2022/034837 A1 | 17 February 2022 | CN 116034032 A | |
| WO 2022/168811 A1 | 11 August 2022 | CN 116829356 A | |
| JP 2013-86272 A | 13 May 2013 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021146687 A